# EUROPÄISCHE PATENTSCHRIFT

(11) **EP 3 964 369 B1**
(45) Veröffentlichungstag und Bekanntmachung des Hinweises auf die Patenterteilung: **01.10.2025**
(21) Anmeldenummer: 21193278.5
(22) Anmeldetag: 26.08.2021
(51) Int. Cl.: B60D 1/48, B60D 1/07, B60R 9/06, B60D 1/52

(54) **MONTAGESYSTEM**
MOUNTING SYSTEM
SYSTÈME DE MONTAGE

(30) Priorität: 02.09.2020 DE 102020122965
(43) Veröffentlichungstag der Anmeldung: 09.03.2022
(73) Patentinhaber: ACPS Automotive GmbH, 74379 Ingersheim (DE)
(72) Erfinder: Hipp, Alexander, 71732 Tamm (DE); Kadnikov, Aleksej, 71229 Leonberg (DE); Rimmelspacher, Bernhard, 76287 Rheinstetten (DE)
(74) Vertreter: Hoeger, Stellrecht & Partner Patentanwälte mbB

(56) Entgegenhaltungen:
- EP-A2- 3 023 302
- DE-A1- 10 061 954
- DE-A1- 102004 033 809
- DE-A1- 102020 119 677
- FR-A1- 2 894 554
- JP-A- 2015 189 446
- US-A1- 2004 040 995

## Beschreibung

Die Erfindung betrifft ein Montagesystem für einen Lastenträger oder eine Anhängekupplung, umfassend mindestens eine Montageaufnahme, welche an einer Heckpartie einer Kraftfahrzeugkarosserie montierbar ist.

Derartige Montagesysteme sind aus dem Stand der Technik bekannt. Das Dokument FR 2 894 554 A1 offenbart ein derartiges Montagesystem.

Diese setzen üblicherweise einen an der Heckpartie montierbaren Querträger ein, der die Montageaufnahme trägt und an welchem dann der Lastenträger oder die Anhängekupplung fixierbar sind.

Diese Lösungen sind aus dem Stand der Technik bekannt, führen jedoch zu einer beachtlichen Zunahme des Fahrzeuggewichts, insbesondere wenn kein Lastenträger oder keine Anhängekupplung zum Einsatz kommt.

Insbesondere dann, wenn gewichtsreduzierte Lösungen gefordert sind, beispielsweise auch bei Elektromobilen, sind diese Lösungen wenig geeignet.

Der Erfindung liegt daher die Aufgabe zugrunde, ein Montagesystem der eingangs beschriebenen Art zu schaffen, welches eine sehr hohe Gewichtsersparnis, insbesondere im Fall ohne einen eingesetzten Lastenträger oder eine Anhängekupplung, ermöglicht.

Diese Aufgabe wird durch ein Montagesystem gemäß Anspruch 1 gelöst.

Diese Lösung hat den großen Vorteil, dass damit eine einfache Anbindung an die Heckpartie des Kraftfahrzeugs über die Montagebereiche für das heckseitige Aufprall- oder Crashelement erfolgen kann und insbesondere mit diesem zusammen möglich ist.

Besonders günstig ist, dass das Aufprall- oder Crashelement erfindungsgemäß einen bei einem Aufprall oder Crash deformierbaren Träger aufweist, der mit Montageansätzen mit den Montagebereichen der Kraftfahrzeugkarosserie verbunden ist.

Der erfindungsgemäß Träger hat den Vorteil, dass dieser sich zumindest in Grenzen unabhängig von der Heckpartie des Kraftfahrzeugs deformieren und somit Aufprall und/oder Crashenergie aufnehmen kann.

Erfindungsgemäß erfolgt die Verbindung der jeweiligen Montageaufnahme mit dem Montagebereich mittels eines Montageträgers, mit welchem die Montageaufnahme mit dem jeweiligen Montagebereich verbindbar oder im montierten Zustand verbunden ist.

Dabei sind die Montageaufnahmen durch den Montageträger neben den Montageansätzen des Aufprall- oder Crashelements angeordnet, so dass dadurch keinerlei konstruktive Änderung des Aufprall- oder Crashelements mit seinen Montageansätzen erforderlich ist, sondern die Montageaufnahmen ihrerseits durch ihre Anordnung neben den Montageansätzen des Aufprall- oder Crashelements zugänglich gemacht werden können.

Besonders günstig ist es, wenn die Montageaufnahmen mittels der Montageträger in Schwerkraftrichtung unterhalb der Montageansätze des Aufprall- oder Crashelements angeordnet sind.

Um den Montageträger einerseits möglichst einfach und andererseits möglichst stabil auszuführen, ist vorzugsweise vorgesehen, dass der Montageträger zur Verbindung mit den Montagebereichen der Kraftfahrzeugkarosserie zwischen einem Montageansatz des Aufprall- oder Crashelements und dem jeweiligen Montagebereich der Kraftfahrzeugkarosserie fixiert ist, insbesondere zwischen dem jeweiligen Montageansatz und dem jeweiligen Montagebereich eingespannt ist, und durch die Verbindung des jeweiligen Montageansatzes mit dem Montagebereich, beispielsweise mittels Schrauben, mitsamt dem Montageansatz am Montagebereich fixiert ist.

Hinsichtlich der Ausbildung des Montageträgers sind die unterschiedlichsten Möglichkeiten denkbar.

Eine vorteilhafte Lösung sieht vor, dass der Montageträger einen Zentralkörper aufweist, der durch mindestens eine Versteifung stabilisiert ist.

Dabei ist vorzugsweise vorgesehen, dass der Zentralkörper einen Auflagebereich aufweist, der zwischen dem Montagebereich und dem entsprechenden Montageansatz fixierbar ist.

Zur Gewichtsersparnis kann der Zentralkörper mit einer oder mehreren Ausnehmungen versehen sein.

Ein derartiger Zentralkörper sollte, um die Verbindung zwischen dem Montagebereich und dem Montageansatz nicht negativ zu beeinflussen, möglichst flach sein.

Aus diesem Grund verläuft die mindestens eine Versteifung außerhalb des Auflagebereichs.

Ferner ist vorzugsweise vorgesehen, dass der Zentralkörper einen Haltebereich aufweist, welcher die Montageaufnahme trägt.

Um auch einen derartigen Haltebereich möglichst einfach auszubilden, ist ebenfalls vorgesehen, dass die mindestens eine Versteifung außerhalb des Haltebereichs verläuft.

Es besteht aber auch die Möglichkeit, die mindestens eine Versteifung mit der Montageaufnahme zu verbinden.

Besonders günstig ist eine Lösung, bei welcher der Auflagebereich und der Haltebereich durch die mindestens eine Versteifung biegesteif miteinander verbunden sind.

Hinsichtlich der Ausbildung und des Einsatzes der Montageaufnahmen wurden bislang keinerlei nähere Angaben gemacht.

Besonders günstig ist es, wenn jede der Montageaufnahmen mit einem Montageelement zur Montage eines Lastenträgers oder einer Anhängekupplung verbindbar ist.

Ein derartiges Montageelement kann in vielfältigster Art und Weise mit den Montageaufnahmen verbunden sein.

Eine besonders einfache und insbesondere gewichtsparende Lösung sieht vor, dass die Montageaufnahmen hülsenähnlich ausgebildet sind, so dass in diese oder auf die Montageelemente einsetzbar oder aufsetzbar sind.

Besonders günstig ist es, wenn in die Montageaufnahmen Montageelemente einsetzbar und in diesen fixierbar sind, die insbesondere ihrerseits mit Lastenaufnahmen versehen sind, welche eine Verbindung mit einem Lastenträger oder einer Anhängekupplung ermöglichen.

Um eine sichere Montage jedes Montageelements an der jeweiligen Montageaufnahme vorzusehen ist vorzugsweise vorgesehen, dass jedes Montageelement einen Führungskörper aufweist, mit welchem das Montageelement in einer Einführrichtung in die Montageaufnahme einsetzbar oder auf diese aufsetzbar und an dieser gegen Querbewegungen und/oder Drehungen um die Einführrichtung fixierbar ist.

Ferner ist vorzugsweise vorgesehen, dass jedes Montageelement durch Anschläge in der Einführrichtung relativ zu der jeweiligen Montageaufnahme definiert positionierbar ist.

Um das Montageelement in der Montageaufnahme festlegen zu können ist vorzugsweise jedes Montageelement mit einer Sicherungseinheit versehen, in welcher dieses in der in die Montageaufnahme eingesetzten Position gegen ein Bewegen entgegengesetzt zur Einführrichtung fixierbar ist.

Eine vorteilhafte Lösung sieht vor, dass die Sicherungseinheit einen Sicherungskörper aufweist, welcher mit einer Sicherungsaufnahme, beispielsweise einer Ausnehmung, der Montageaufnahme in Eingriff bringbar ist.

Darüber hinaus ist vorzugsweise vorgesehen, dass in der Lastenaufnahme jedes Montageelements eine Trägerbasis eines Lastenträgers oder einer Anhängekupplung fixierbar ist.

Das heißt, dass die Lastenaufnahme selbst lediglich wiederum eine Aufnahme für eine Trägerbasis eines Lastenträgers oder der Anhängekupplung darstellt.

Prinzipiell können die Montageelemente mit der Trägerbasis des Lastenträgers oder der Anhängekupplung verbunden, beispielsweise fest verbunden sein.

Es ist aber auch möglich, die Lastenaufnahmen so zu gestalten, dass die Trägerbasis des Lastenträgers oder der Anhängekupplung nach Einsetzen der Montageelemente in die Montageaufnahmen in den Lastenaufnahmen kraft- und/oder formschlüssig fixierbar oder in dem Betriebszustand kraft- und/oder formschlüssig fixiert ist.

Eine vorteilhafte und insbesondere einfach zu realisierende Lösung sieht vor, dass jeder Lastenaufnahme Klemmelemente zugeordnet sind, mit welchen die Trägerbasis in der jeweiligen Lastenaufnahme gegebenenfalls ergänzend zu einem Formschluss kraftschlüssig fixierbar ist.

Dies ist beispielsweise dadurch möglich, dass die Klemmelemente unmittelbar auf die Trägerbasis wirken.

Es ist aber auch denkbar, dass die Klemmelemente die Lastenaufnahme selbst derart deformieren, dass die Trägerbasis durch die Lastenaufnahme einspannbar ist.

Eine vorteilhafte Gestaltung einer derartigen Lastenaufnahme sieht vor, dass diese U-förmig, beispielsweise zur Aufnahme der Trägerbasis, ausgebildet ist.

Um ferner sicherzustellen, dass der Sicherungskörper bei montiertem Lastenträger oder montierter Anhängekupplung mit der Sicherungsaufnahme in der Montageaufnahme in Eingriff bleibt, ist vorzugsweise vorgesehen, dass der Sicherungskörper durch ein Blockierelement dann gegen ein Herausbewegen aus der Sicherungsaufnahme blockiert ist, wenn in der jeweiligen Lastenaufnahme der Lastenträger oder die Anhängekupplung gehalten ist, insbesondere mittels der Trägerbasis gehalten ist.

Eine andere vorteilhafte Lösung sieht vor, dass der Satz von zwei Montageaufnahmen an dem Aufprall- oder Crashelements gehalten ist, das heißt direkt mit dem Aufprall- oder Crashelement verbunden ist. Dies kann eine mittelbare, lösbare Verbindung, beispielsweise mittels eines Montageträgers, oder eine unmittelbare Verbindung, beispielsweise durch Fügen sein.

Eine bevorzugte Lösung sieht in diesem Fall vor, dass die Montageaufnahmen mit dem Träger des Aufprall- oder Crashelements verbunden sind. Dies kann eine mittelbare, lösbare Verbindung, beispielsweise mittels eines Montageträgers, oder eine unmittelbare Verbindung, beispielsweise durch Fügen sein Dabei können die Montageaufnahmen beispielsweise an dem Träger in Fortsetzung der Montageansätze angeordnet sein, so dass insbesondere die Montageansätze so ausgebildet sein können, dass sie ebenfalls auch die Montageaufnahmen bilden.

Eine andere vorteilhafte Lösung sieht vor, dass die Montageaufnahmen relativ zu den Montageansätzen des Aufprall- oder Crashelements versetzt angeordnet sind.

Prinzipiell könnten die Montageaufnahmen so an dem Träger angeordnet sein, dass sie an diesem lösbar, beispielsweise durch Verschrauben gehalten sind.

Eine andere vorteilhafte Lösung sieht vor, dass die Montageaufnahmen unlösbar mit dem Träger des Aufprall- oder Crashelements verbunden, das heißt beispielsweise mit diesem verschweißt, sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht einer Heckpartie eines Kraftfahrzeugs mit einem an dieser montierten Aufprall- oder Crashelement unterhalb einer Stoßfängereinheit;
- Fig. 2: ein erstes Ausführungsbeispiel eines erfindungsgemäßen Montagesystems, umfassend zwei Montageaufnahmen, die mittels Montageträgern, welche zwischen Montageansätzen des Aufprall- oder Crashelements und den Montagebereichen der Kraftfahrzeugkarosserie eingreifen, mit den Montagebereichen und den Montageansätzen verbunden sind;
- Fig. 3: einen Längsschnitt längs Linie 3-3 in Fig. 2;
- Fig. 4: eine perspektivische Ansicht einer Montageaufnahme mit dem zugehörigen Montageträger;
- Fig. 5: eine Darstellung ähnlich Fig. 2 vor Einsetzen von Montageelementen in die Montageaufnahmen;
- Fig. 6: eine perspektivische Darstellung eines Montageelements mit Blick in Richtung eines Pfeils A in Fig. 5;
- Fig. 7: eine Draufsicht auf das Montageelement mit Blick in Richtung des Pfeils B in Fig. 6;
- Fig. 8: eine Draufsicht auf das Montageelement mit Blick in Richtung des Pfeils C in Fig. 7;
- Fig. 9: eine Darstellung ähnlich Fig. 5 mit in die Montageaufnahmen eingesetzten Montageelementen;
- Fig. 10: eine Darstellung ähnlich Fig. 9 mit einem in den Montageelementen gehaltenen Lastenträger;
- Fig. 11: eine Seitenansicht in Richtung des Pfeils D in Fig. 10;
- Fig. 12: eine Darstellung eines zweiten Ausführungsbeispiels eines erfindungsgemäßen Montagesystems mit einer von den Montageelementen enthaltenen Anhängekupplungen;
- Fig. 13: eine perspektivische Darstellung ähnlich Fig. 2 eines dritten Ausführungsbeispiels eines erfindungsgemäßen Montagesystems mit an einem Träger des Aufprall- oder Crashelements angeordneten Montageaufnahmen;
- Fig. 14: eine Darstellung eines in den Montageaufnahmen des dritten Ausführungsbeispiels mittels Montageelementen gehaltenen Lastenträgers;
- Fig. 15: eine perspektivische Darstellung eines vierten Ausführungsbeispiels eines erfindungsgemäßen Montagesystems mit ebenfalls an dem Träger des Aufprall- oder Crashelements gehaltenen Montageaufnahmen und
- Fig. 16: eine Darstellung des vierten Ausführungsbeispiels des erfindungsgemäßen Montagesystems mit in den Montageaufnahmen gemäß Fig. 14 eingesetzten Montageelementen zur Aufnahme eines Lastenträgers oder einer Anhängekupplung.

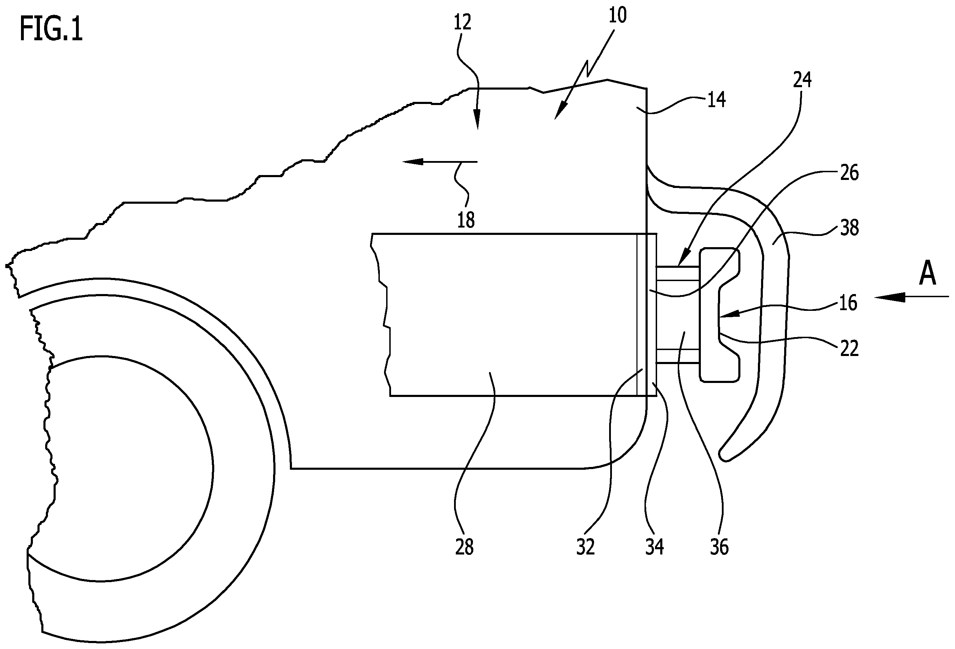

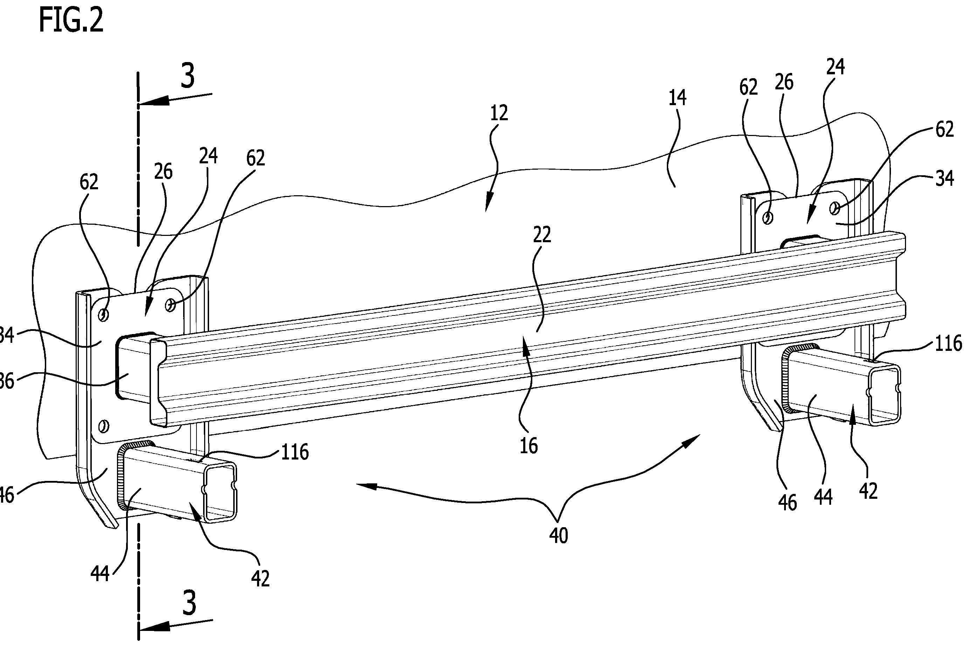

Ein in Fig. 1 dargestelltes Ausführungsbeispiel eines für die Erfindung geeigneten Kraftfahrzeugs 10 umfasst eine Kraftfahrzeugkarosserie 12, wenn an dessen Heckpartie 14 ein Aufprall- oder Crashelement 16 angeordnet ist, das, wie in Fig. 1 und 2 dargestellt, einen sich quer zu einer Fahrzeuglängsrichtung 18 Träger 22 zur Aufnahme eines Aufpralls aufweist, welcher über zwei Montageansätze 24 an zwei Montagebereichen 26 der Heckpartie 14 abgestützt ist.

Jeder Montagebereich 26 der Heckpartie 14 wird beispielsweise gebildet durch einen von zwei sich in Fahrzeuglängsrichtung 18 an einander gegenüberliegenden Längsseiten der Kraftfahrzeugkarosserie 12 erstreckenden Längsträger 28, der beispielsweise noch eine Abschlussplatte 32 trägt, wobei die Abschlussplatte 32 mit ihrer dem Montageansatz 24 zugewandten Seite den Montagebereich 26 an der Heckpartie 14 bildet.

Vorzugsweise umfasst jeder der Montageansätze 24 eine Flanschplatte 34 und einen sich von dieser bis zu dem Träger 22 erstreckenden Stützarm 36, welche den Träger 22 im Abstand von der Heckpartie 14, so dass sich der Träger 22 bei einem heckseitigen Aufprall auf die Kraftfahrzeugkarosserie 12 zumindest zunächst unabhängig von derselben deformieren kann.

Das Aufprall- oder Crashelement 16 ist ferner vorzugsweise verdeckt von einer an der Heckpartie 14 gehaltenen und sichtbaren Stoßfängereinheit 38, die im Wesentlichen zur optischen Gestaltung der Heckpartie vorgesehen ist, jedoch beispielsweise bei einem Heckaufprall auf das Kraftfahrzeug 10 einen unwesentlichen Einfluss auf die Aufnahme der Kräfte hat.

Um an einem derartigen Kraftfahrzeug 10, insbesondere dessen Kraftfahrzeugkarosserie 12 an seiner Heckpartie 14 einen Lastenträger oder eine Anhängekupplung montieren zu können, ist zur lösbaren Fixierung eines Lastenträgers oder einer Anhängekupplung ein Satz 40 von Montageaufnahmen 42 vorgesehen, die beispielsweise jeweils eine Aufnahmehülse 44 aufweisen, welche zur Aufnahme nachfolgend im Detail beschriebenen Montageelemente dienen.

Beispielsweise sind dabei die Aufnahmehülsen 44 als im Querschnitt rechteckförmige Hülsenkörper ausgebildet.

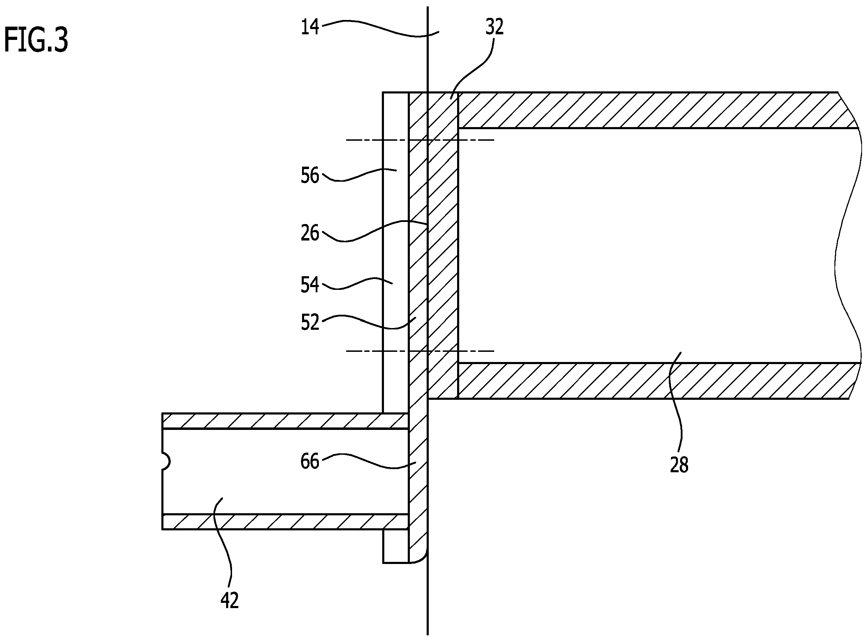

Zur Verbindung dieser Montageaufnahmen 42 mit der Kraftfahrzeugkarosserie 12 ist jede dieser Montageaufnahmen 42 an einem Montageträger 46 fixiert, welcher, wie in Fig. 2 und 3 dargestellt, unmittelbar auf dem jeweiligen Montagebereich 26 der Heckpartie 14 aufliegt und somit zwischen dem jeweiligen Montageansatz 24 des Aufprall- oder Crashelements 16 und dem Montagebereich 26 eingespannt werden kann, so dass sich der jeweilige Montageträger 46 einerseits an dem jeweiligen Montagebereich 26 der Heckpartie 14 zur Kraftaufnahme abstützen kann und andererseits mit dem Montageansatz 24 des Aufprall- oder Crashelements 16 verbunden ist, der sich ebenfalls über den jeweiligen Montageträger 46 an dem Montagebereich 26 der Heckpartie 14 abstützt.

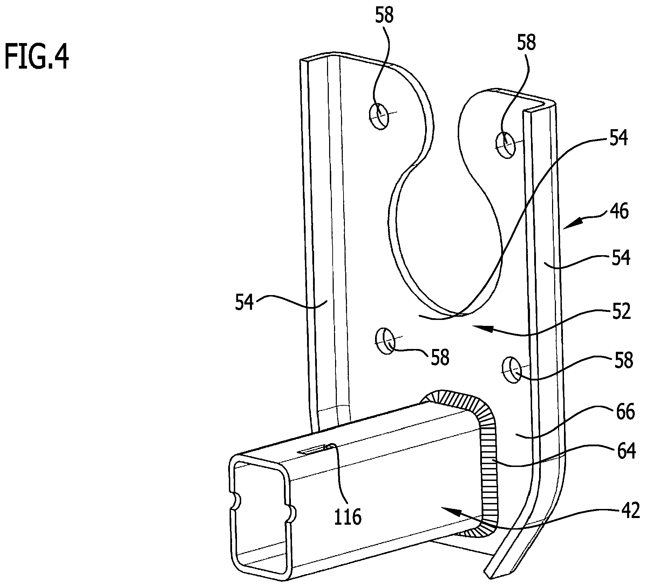

Vorzugsweise ist der Montageträger 46 nicht ausschließlich als flache Platte ausgebildet, sondern weist, wie in Fig. 2 und 4 dargestellt, einen Zentralkörper 52 auf, der beispielsweise als Platte, zur Gewichtsersparnis mit einer Ausnehmung versehen, ausgebildet ist, sowie mit dem Zentralkörper 52 verbundene Versteifungen desselben, insbesondere ausgebildet als einstückig an diesen angeformte Versteifungen 54, welche in dem dargestellten Fall gemäß Fig. 4 durch seitlich des Zentralkörpers 52 verlaufende Aufkantungen 54 realisiert sind.

Anstelle von Aufkantungen 54 ist dabei ebenfalls möglich, Sicken oder Umfalzungen insbesondere seitlich des Zentralkörpers 52 vorzusehen.

Der Zentralkörper 52 ist dabei insbesondere so ausgebildet, dass er einen zentralen Auflagebereich 56 bildet, auf welchem die Montageansätze 24 des Aufprall- oder Crashelements 16 insbesondere mit den Flanschplatten 34 vollflächig abstützbar sind und welcher somit zwischen dem jeweiligen Montageansatz 24 und dem entsprechenden Montagebereich 26 eingespannt werden kann.

Ferner weist der Auflagebereich 56 noch Durchlässe 58 auf, die deckungsgleich mit entsprechenden Durchlässen 62 in den Flanschplatten 34 angeordnet sind und somit ein Verschrauben der jeweiligen Flanschplatte 34 mit dem Zentralkörper 52 des Montageträgers 46 und dem Montagebereich 26 erlauben.

Ferner sind bei der erfindungsgemäßen Lösung die Montageaufnahmen 42 mit einer Stirnseite 64 mit einem Haltebereich 66 des Zentralkörpers 52 verschweißt, wobei sich die Versteifungen 54 sowohl entlang des Auflagebereichs 56 als auch des Haltebereichs 66 erstrecken um somit den Haltebereich 66 relativ zum Auflagebereich 56 biegesteif, insbesondere starr zu fixieren.

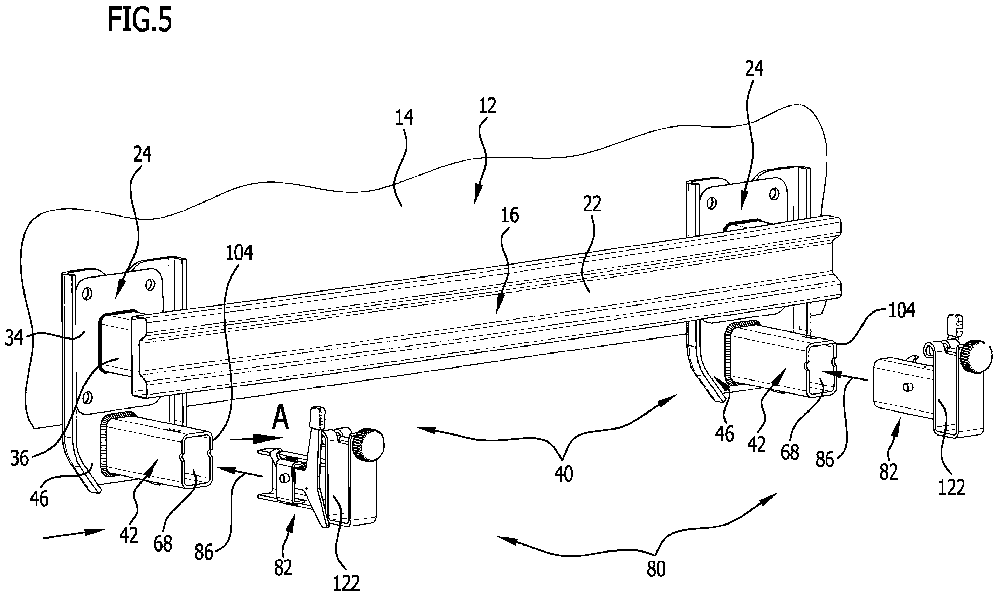

Wie in Fig. 5 dargestellt, ist in einen inneren Aufnahmeraum 68 jede der Montageaufnahmen 42 des Satzes 40 von Montageaufnahmen ein Montageelement 82 eines Satzes 80 von Montageelementen einsetzbar, wobei, wie in den Fig. 5 bis 8 im Detail dargestellt, jedes dieser Montageelemente 82 einen Führungskörper 84 aufweist, welcher in die jeweilige Montageaufnahme 42, insbesondere die Aufnahmehülse 44 der jeweiligen Montageaufnehme 42 in einer Einführrichtung 86 einführbar ist und sowohl gegen eine Bewegung quer zur Einführrichtung 86 aufgrund seiner Außenkontur als auch eine Drehung um die Einführrichtung 86 durch die Montageaufnahme 42, insbesondere deren Aufnahmehülse 44, geführt ist.

Insbesondere umfasst der Führungskörper 84 einen C-förmig ausgebildeten Grundkörper 88 und einen in den Grundkörper 88 eingesetzten Stützkörper 92 so dass der Grundkörper 88 mit seinem Mittelschenkel 94 einerseits und dem Stützkörper 92 andererseits eine Seitenführung für das Montageelement 82 bildet und mit seinen beiden Seitenschenkeln 96 und 98 das Montageelement 82 in der Aufnahmehülse 44 der Montageaufnahme 42 gegen Bewegungen parallel zu einer vertikalen Richtung sichert.

Ferner ist der Führungskörper 84 noch mit beiderseits über diesen überstehenden Anschlägen 102 versehen, welche das Einführen des Führungskörpers 84 in den Aufnahmeraum 68 der jeweiligen Montageaufnahme 42, insbesondere der jeweiligen Aufnahmehülse 44, durch Anliegen an einer dem Montageträger 46 abgewandten Stirnseite 104 begrenzt.

Zur Fixierung des jeweiligen Montageelements 82 in der jeweiligen Montageaufnahme 42 ist das jeweilige Montageelement 82 mit einer Sicherungseinheit 112 versehen, welche einen Sicherungskörper, beispielsweise einen Sicherungshaken 114, aufweist, welcher mit einer Sicherungsaufnahme 116, beispielsweise ausgebildet in Form eines Durchbruchs in der Montageaufnahme 42, insbesondere der Aufnahmehülse 44 derselben, zusammenwirkt, um das Montageelement 82 in seiner in die jeweilige Montageaufnahme 42 eingesetzten Position gegen eine Bewegung entgegensetzt zur Einführrichtung sichern zu können.

Vorzugsweise ist dabei der Sicherungskörper 114 mittels eines Federelements 118 so beaufschlagt, dass der Sicherungskörper 114 bei in die Montageaufnahme 42 eingesetzten Montageelement 82 das Bestreben hat, mit der Sicherungsaufnahme 116 in Eingriff zu kommen.

Im einfachsten Fall ist der Sicherungskörper 114 um einen die Anschläge 102 bildenden Bolzen drehbar gelagert und wird seitens des Federelements 118 in Richtung einer Schwenkbewegung in die Sicherungsaufnahme 116 eingreifenden Stellung beaufschlagt.

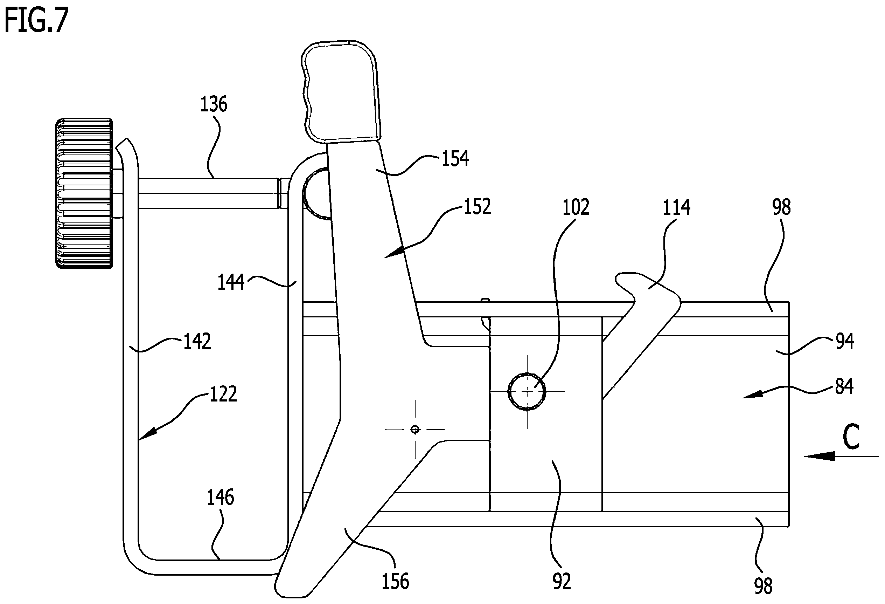

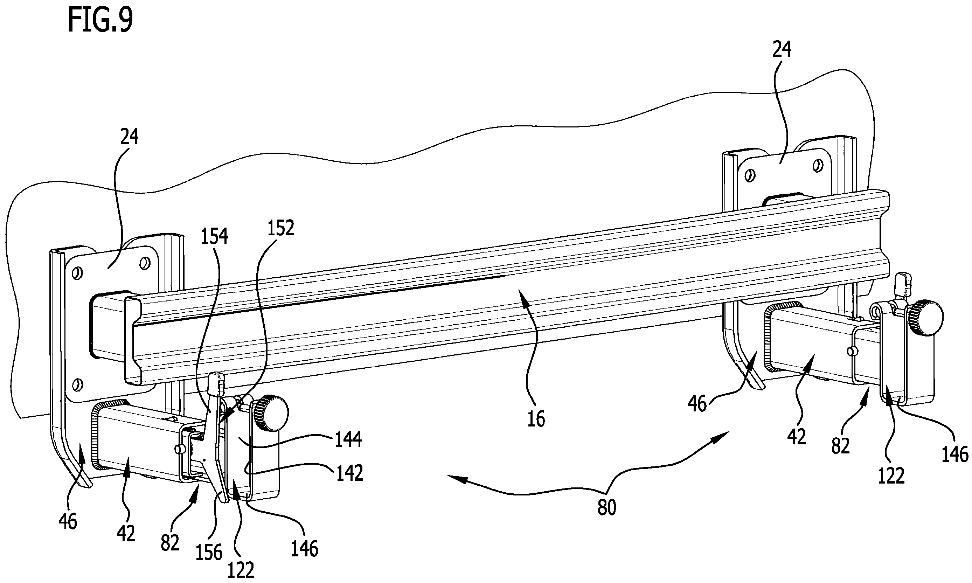

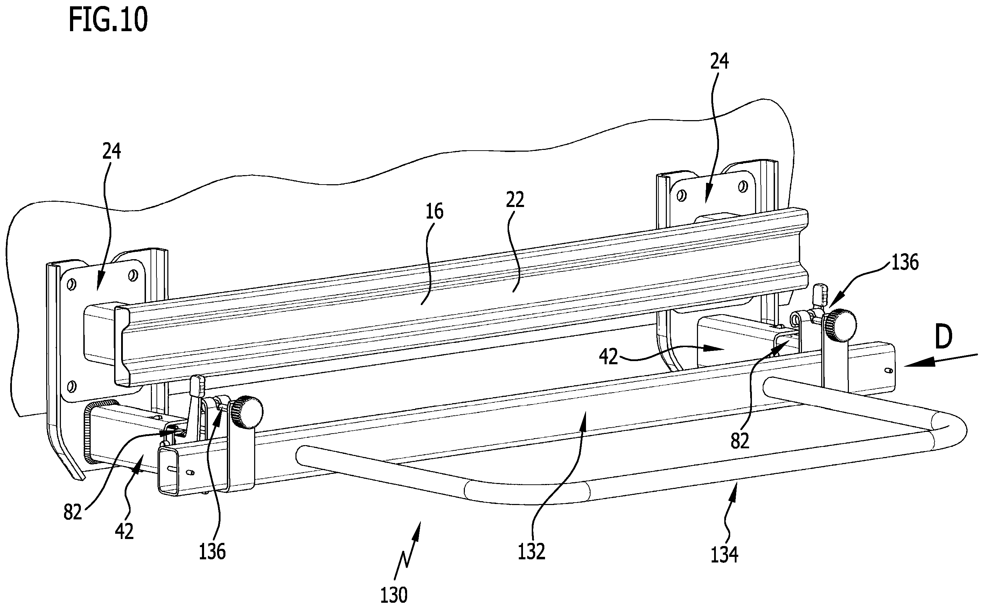

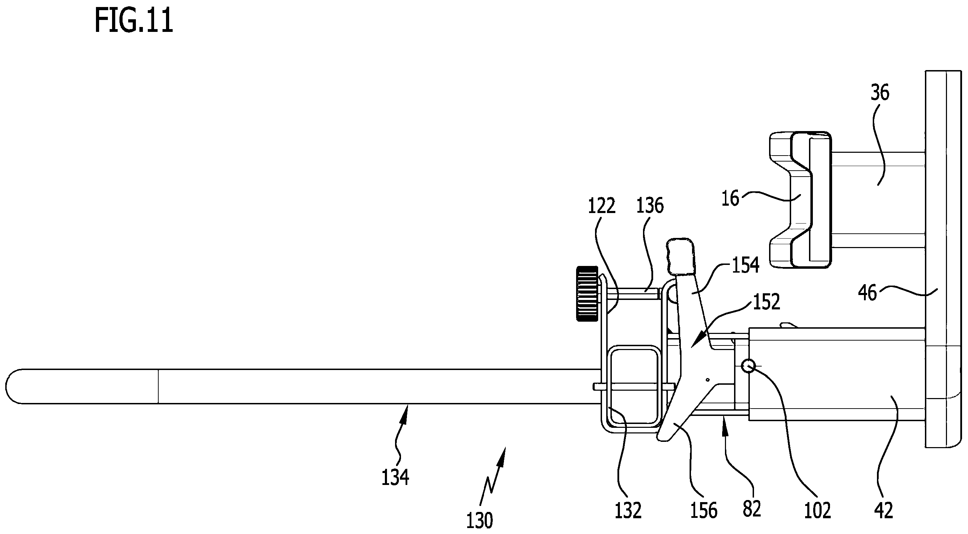

Wie insbesondere in Fig. 5 bis 9 erkennbar, umfasst jedes Montageelement 82 eine an dem Führungskörper 84 gehaltene ungefähr U-förmige Lastenaufnahme 122, wobei die Lastenaufnahmen 122 bei dem Satz 80 von Montageelementen 82 im in den Satz 40 von Montageaufnahmen 42 eingesetzten Zustand miteinander fluchten, so dass, wie in Fig. 10 und 11 dargestellt, in die Lastenaufnahmen 122 eine Trägerbasis 132 eines einen Trägerrahmen 134 aufweisenden Lastenträgers 130 einsetzbar und beispielsweise den Lastenaufnahmen 122 zugeordnete Klemmelemente 136, mit welchen, wie in Fig. 7 dargestellt, die Lastenaufnahmen 122 durch aufeinanderzu bewegen ihrer Aufnahmeschenkel 142 und 144, die sich ausgehend von einer Aufnahmebasis 146 erstrecken, an der Trägerbasis 132, beispielsweise ausgebildet als in die Lastenaufnahmen 132 eingreifenden Vierkantrohre, kraftschlüssig fixierbar sind.

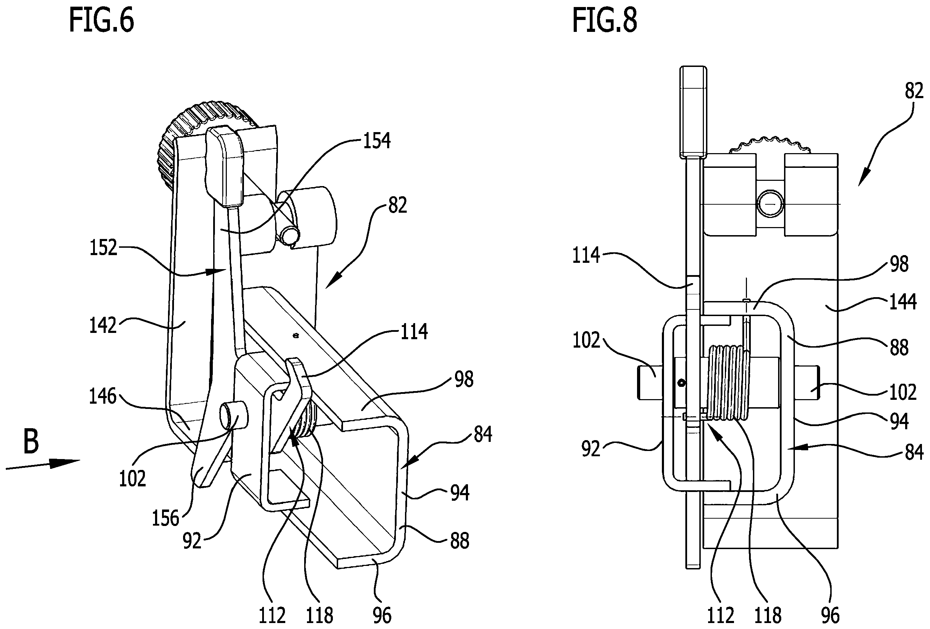

Darüber hinaus ist, wie in Fig. 7 dargestellt, zur Betätigung des Sicherungskörpers 114, um diesen aus der jeweiligen Sicherungsaufnahme 116 heraus bewegen zu können, eine Hebelanordnung 152 vorgesehen, welche einerseits einen manuell betätigbaren Einwirkungshebel 154 und andererseits einen Blockierhebel 156 aufweist, wobei der Blockierhebel 156 ein Verschwenken des Sicherungskörpers 114 in Richtung aus der jeweiligen Sicherungsaufnahme 116 heraus dann verhindert, wenn in der Lastenaufnahme 122 die Trägerbasis 132 des Lastenträgers 130 gehalten ist, da nämlich in diesem Fall der Blockierhebel 156 bei einer Verschwenkbewegung des Sicherungskörpers 114 in Richtung aus der jeweiligen Sicherungsaufnahme 116 heraus durch die Trägerbasis 132 blockiert ist und erst dann die Blockade aufgehoben ist, wenn keine Trägerbasis 132 mehr in der Lastenaufnahme 122 aufgenommen ist, wie dies in Fig. 8 dargestellt ist.

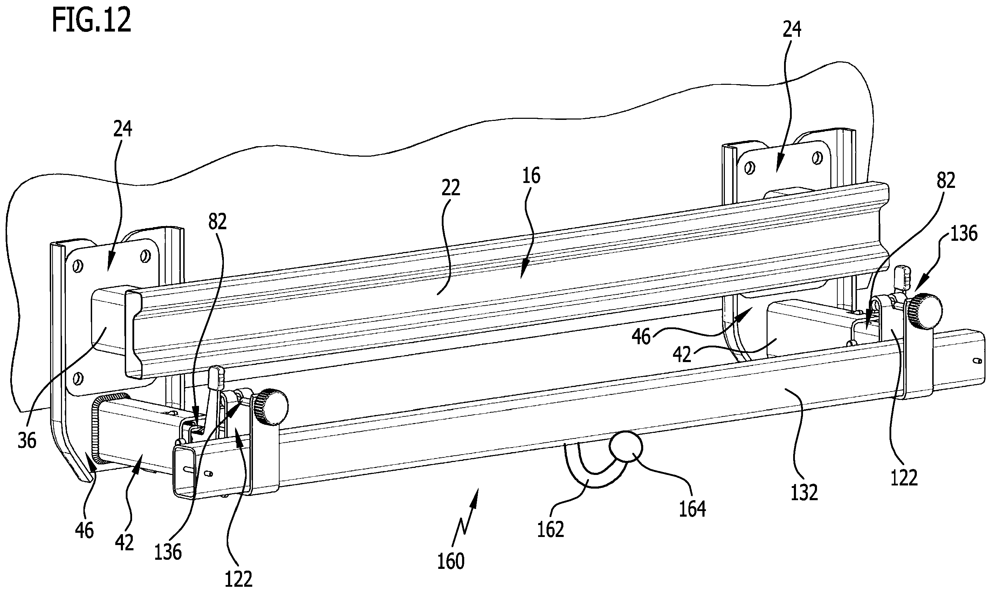

Bei einem zweiten Ausführungsbeispiel ist die Trägerbasis 132 nicht die Trägerbasis eines Lastenträgers 130 sondern einer Anhängekupplung 160 und trägt einen Kugelhals 162 mit einer Kupplungskugel 164, an welche in bekannter Weise ein Anhänger ankuppelbar ist (Fig. 12).

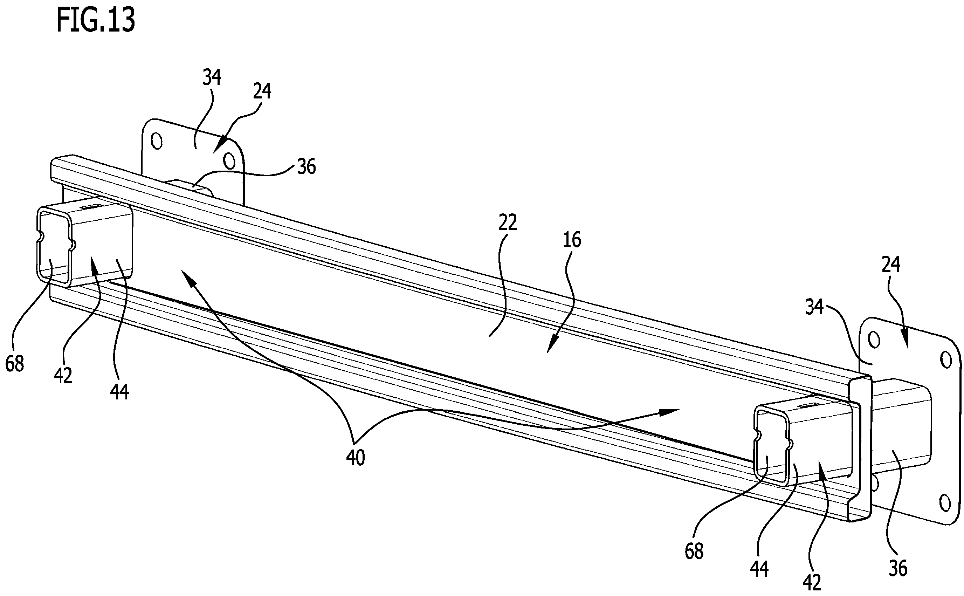

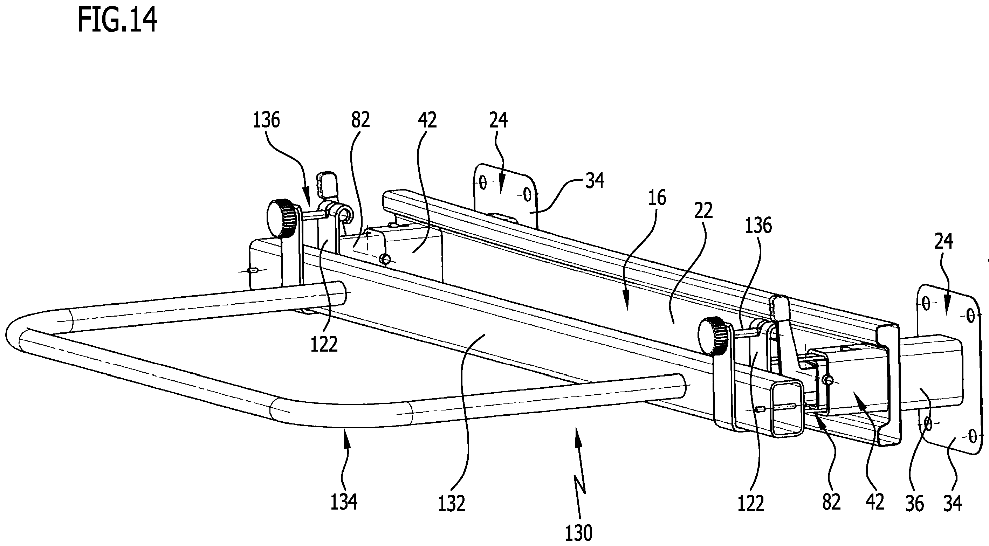

Bei einem dritten Ausführungsbeispiel, dargestellt in Fig. 13 und 14, ist der Satz 40 von Montageaufnahmen 42 unmittelbar an dem Träger 22 des Aufprall- oder Crashelements 16 angeordnet und zwar in Fortsetzung der sich ausgehend von den Flanschplatten 34 erstreckenden Stützarmen 36, wobei im einfachsten Fall die Stützarme 36 denselben Querschnitt aufweisen als die Aufnahmehülsen 44 der Montageaufnahmen 42, so dass im einfachsten Fall die Aufnahmehülsen 44 und die Stützarme 36 ein einstückiges, den jeweiligen Träger 22 durchsetztes und mit diesem verschweißtes Teil darstellen.

Im Übrigen sind die Montageaufnahmen 42 in gleicher Weise ausgebildet wie beim ersten Ausführungsbeispiel, so dass, wie in Fig. 14 dargestellt, in diese Montageaufnahmen 42 dieselben Montageelemente 82 wie beim ersten Ausführungsbeispiel einsetzbar sind und diese in gleicher Weise wie beim ersten Ausführungsbeispiel Lastaufnahmen 122 aufweisen, in welche die Trägerbasis 132 des als Ganzes mit 130 bezeichneten Lastenträgers einsetzbar ist, der ebenfalls in gleicher Weise wie beim ersten Ausführungsbeispiel ausgebildet ist.

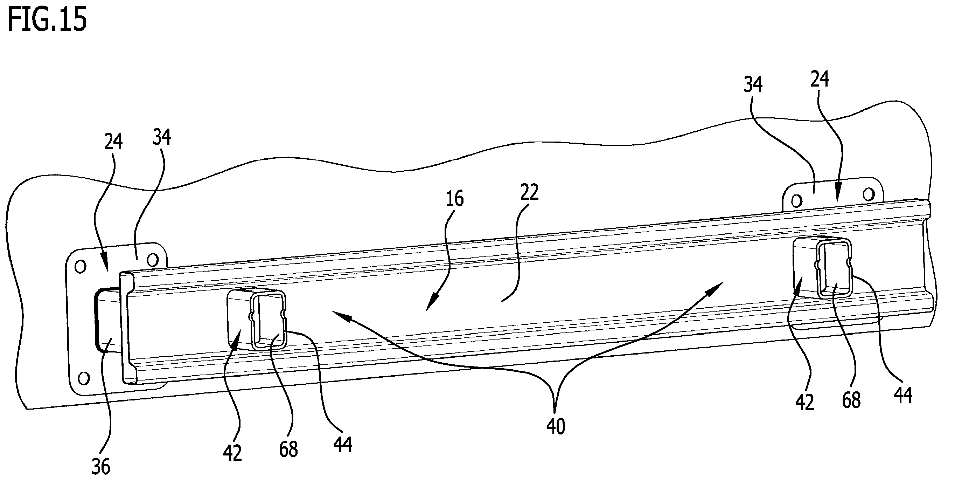

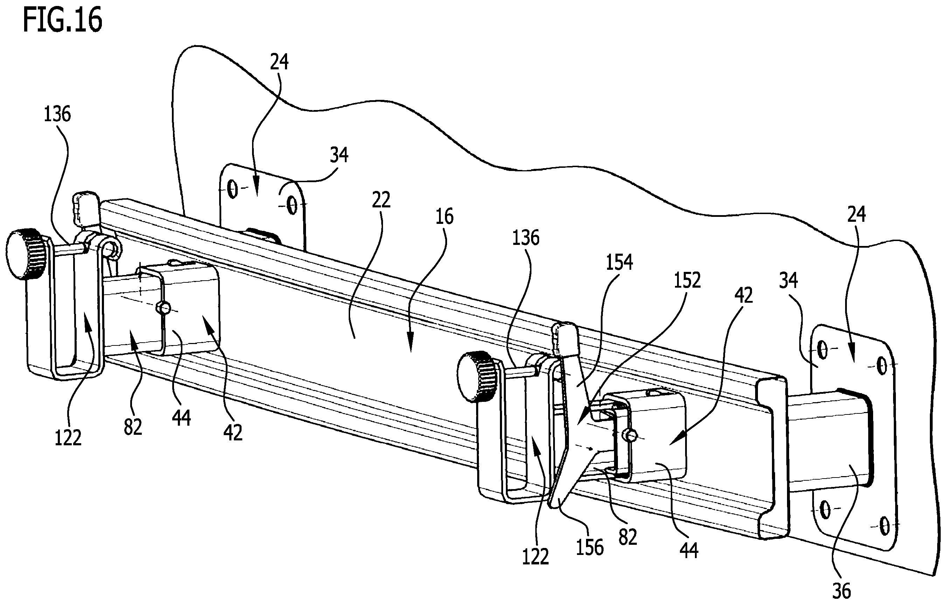

Bei einem vierten Ausführungsbeispiel, dargestellt in Fig. 15 und Fig. 16 ist der Satz 40 von Montageaufnahmen 42 an dem Träger 22 des Aufprall- oder Crashelements 16 angeordnet, wobei allerdings die Montageaufnahmen 42 relativ zu den Stützarmen 36 versetzt sind und somit in Längsrichtung des Trägers 22 einen anderen Abstand voneinander aufweisen als die Stützarme 36 beim dritten Ausführungsbeispiel.

Auch bei diesem Ausführungsbeispiel sind insbesondere die Aufnahmehülsen 44 in gleicher Weise ausgebildet wie bei den voranstehenden Ausführungsbeispielen, so dass in diese Aufnahmehülsen 44 dieselben Montageelemente 82 wie bei den voranstehenden Ausführungsbeispielen eingesetzt werden können, die in gleicher Weise wie bei den voranstehenden Ausführungsbeispielen mit den Lastenaufnahmen 122 versehen sind.

Damit ist auch beim vierten Ausführungsbeispiel in die Lastenaufnahmen 122 die Trägerbasis 132 des Lastenträgers 130 oder der Anhängekupplung 160 einsetzbar und in dieser fixierbar.

## Patentansprüche

1. Montagesystem (40) für einen Lastenträger (140) oder eine Anhängekupplung (160), umfassend mindestens eine Montageaufnahme (42), welche an einer Heckpartie (14) einer Kraftfahrzeugkarosserie (12) montierbar ist,
wobei das Montagesystem einen Satz (40) von zwei Montageaufnahmen (42) aufweist, der so ausgebildet ist, dass jede der Montageaufnahmen (42) im montierten Zustand mit einem der Montagebereiche (26) für das an der Kraftfahrzeugkarosserie (12) vorgesehene heckseitige Aufprall- oder Crashelement (16) mit der Kraftfahrzeugkarosserie (12) verbunden ist, wobei das Aufprall- oder Crashelement (16) einen bei einem Aufprall oder Crash deformierbaren Träger (22) aufweist, der mit Montageansätzen (24) mit den Montagebereichen (26) der Kraftfahrzeugkarosserie (12) verbunden ist, wobei jede Montageaufnahme (42) mittels eines Montageträgers (46) mit dem jeweiligen Montagebereich (26) verbindbar oder im montierten Zustand verbunden ist, dadurch gekenzeichnet, dass die Montageaufnahmen (42) durch den Montageträger (46) neben den Montageansätzen (24) des Aufprall- oder Crashelements (16) angeordnet sind.

2. Montagesystem nach Anspruch 1, **dadurch gekennzeichnet, dass** die Montageaufnahmen (42) mittels der Montageträger (46) in Schwerkraftrichtung unterhalb der Montageansätze (24) des Aufprall- oder Crashelements (16) angeordnet sind.

3. Montagesystem nach einem der voranstehenden Ansprüche, **dadurch gekennzeichnet, dass** der Montageträger (46) zur Verbindung mit den Montagebereichen (26) der Kraftfahrzeugkarosserie (12) zwischen einem Montageansatz (24) des Aufprall- oder Crashelements (16) und dem jeweiligen Montagebereich (26) der Kraftfahrzeugkarosserie (12) fixiert ist, dass insbesondere der jeweilige Montageträger (46) einen Zentralkörper (52) aufweist, der durch mindestens eine Versteifung (54) stabilisiert ist, dass insbesondere der Zentralkörper (52) einen Auflagebereich (56) aufweist, der zwischen dem Montagebereich (26) und dem entsprechenden Montageansatz (24) fixierbar ist, dass insbesondere der Zentralkörper (52) einen Haltebereich (66) aufweist, welcher die Montageaufnahme (42) trägt, dass insbesondere der Auflagebereich (56) und der Haltebereich (66) durch die mindestens eine Versteifung (54) biegesteif miteinander verbunden sind.

4. Montagesystem nach einem der voranstehenden Ansprüche, **dadurch gekennzeichnet, dass** jede der Montageaufnahmen (42) mit einem Montageelement (82) verbindbar ist, dass insbesondere die Montageaufnahmen (42) hülsenähnlich ausgebildet sind.

5. Montagesystem nach Anspruch 4, **dadurch gekennzeichnet, dass** in die Montageaufnahmen (42) Montageelemente (82) einsetzbar oder auf diese aufsetzbar und an diesen fixierbar sind, die insbesondere ihrerseits mit Lastenaufnahmen (122) versehen sind, welche eine Verbindung mit einem Lastenträger (130) oder einer Anhängekupplung (160) ermöglichen.

6. Montagesystem nach Anspruch 4 oder 5, **dadurch gekennzeichnet, dass** jedes Montageelement (82) einen Führungskörper (84) aufweist, mit welchem das Montageelement (82) in einer Einführrichtung (86) in die Montageaufnahme (42) einsetzbar oder auf diese aufsetzbar und an dieser gegen Querbewegungen und/oder Drehungen um die Einführrichtung (86) fixierbar ist, dass insbesondere jedes Montageelement (82) durch Anschläge (102) in der Einführrichtung (86) relativ zu der jeweiligen Montageaufnahme (42) definiert positionierbar ist.

7. Montagesystem nach einem der Ansprüche 4 bis 6, **dadurch gekennzeichnet, dass** jedes Montageelement (82) mit einer Sicherungseinheit (112) versehen ist, mit welcher dieses in der in die Montageaufnahme (42) eingesetzten Position gegen ein Bewegen entgegengesetzt zur Einführrichtung (86) fixierbar ist, dass insbesondere die Sicherungseinheit (112) einen Sicherungskörper (114) aufweist, welcher mit einer Sicherungsaufnahme (116) der Montageaufnahme (42) in Eingriff bringbar ist.

8. Montagesystem nach einem der Ansprüche 4 bis 7, **dadurch gekennzeichnet, dass** in einer Lastenaufnahme (122) jedes Montageelements (82) eine Trägerbasis (132) eines Lastenträgers (130) oder einer Anhängekupplung (160) fixierbar oder in dem Betriebszustand fixiert ist, dass insbesondere jeder Lastenaufnahme (122) Klemmelemente (136) zugeordnet sind, mit welchen die Trägerbasis (132) in der jeweiligen Lastenaufnahme (122) kraftschlüssig fixierbar ist, dass insbesondere jede Lastenaufnahme (122) U-förmig, beispielsweise zur Aufnahme der Trägerbasis (132), ausgebildet ist.

9. Montagesystem nach einem der Ansprüche 7 oder 8, **dadurch gekennzeichnet, dass** der Sicherungskörper (114) durch ein Blockierelement (156) dann gegen ein Herausbewegen aus der Sicherungsaufnahme (116) blockiert ist, wenn in der jeweiligen Lastenaufnahme (122) der Lastenträger (130) oder die Anhängekupplung (160) gehalten ist.

10. Montagesystem nach einem der voranstehenden Ansprüche, **dadurch gekennzeichnet, dass** der Satz von zwei Montageaufnahmen (42) an dem Aufprall- oder Crashelement (16) gehalten ist.

11. Montagesystem nach Anspruch 10, **dadurch gekennzeichnet, dass** die Montageaufnahmen (42) mit dem Träger (22) des Aufprall- oder Crashelements (16) verbunden sind.

12. Montagesystem nach einem der Ansprüche 9 bis 11, **dadurch gekennzeichnet, dass** die Montageaufnahmen (42) an dem Träger (22) in Fortsetzung der Montageansätze (24) angeordnet sind.

13. Montagesystem nach einem der Ansprüche 9 bis 12, **dadurch gekennzeichnet, dass** die Montageaufnahmen (42) relativ zu den Montageansätzen (24) des Aufprall- oder Crashelements (16) versetzt angeordnet sind.

14. Montagesystem nach einem der Ansprüche 10 bis 13, **dadurch gekennzeichnet, dass** die Montageaufnahmen (42) unlösbar mit dem Träger (22) des Aufprall- oder Crashelements (16) verbunden sind.

## Claims

1. A mounting system (40) for a load carrier (140) or a trailer coupling (160), comprising at least one mounting receptacle (42), which is mountable on a rear section (14) of a motor vehicle body (12), wherein the mounting system has a set (40) of two mounting receptacles (42), which is configured such that each of the mounting receptacles (42) in the mounted state is connected to the motor vehicle body (12) by means of one of the mounting regions (26) for the rear-side impact or crash element (16) provided on the motor vehicle body (12), wherein the impact or crash element (16) has a carrier (22) that is deformable in the event of an impact or crash and that is connected by means of mounting attachments (24) to the mounting regions (26) of the motor vehicle body (12), wherein each mounting receptacle (42) is connectable or, in the mounted state, is connected to the respective mounting region (26) by means of a mounting carrier (46), **characterized in that** the mounting receptacles (42) are arranged next to the mounting attachments (24) of the impact or crash element (16) by the mounting carrier (46).

2. A mounting system in accordance with claim 1, **characterized in that** the mounting receptacles (42) are arranged, by means of the mounting carrier (46), below the mounting attachments (24) of the impact or crash element (16) in the direction of the force of gravity.

3. A mounting system in accordance with the preceding claims, **characterized in that** the mounting carrier (46) for connection to the mounting regions (26) of the motor vehicle body (12) is fixed between a mounting attachment (24) of the impact or crash element (16) and the respective mounting region (26) of the motor vehicle body (12), **in that** in particular the respective mounting carrier (46) has a central body (52), which is stabilized by at least one reinforcement (54), **in that** in particular the central body (52) has a support region (56), which is fixable between the mounting region (26) and the corresponding mounting attachment (24), **in that** in particular the central body (52) has a holding region (66), which carries the mounting receptacle (42), **in that** in particular the support region (56) and the holding region (66) are connected to one another in a rigid manner by the at least one reinforcement (54).

4. A mounting system in accordance with the preceding claims, **characterized in that** each of the mounting receptacles (42) is connectable to a mounting element (82), **in that** in particular the mounting receptacles (42) are sleeve-like.

5. A mounting system in accordance with claim 4, **characterized in that** mounting elements (82) are insertable into the mounting receptacles (42) or placeable thereon and fixable thereto, which mounting elements are in turn provided with load receptacles (122), which allow a connection to a load carrier (130) or a trailer coupling (160).

6. A mounting system in accordance with claim 4 or 5, **characterized in that** each mounting element (82) has a guide body (84), by means of which the mounting element (82) is insertable in an insertion direction (86) into the mounting receptacle (42) or is placeable thereon and is fixable thereto against transverse movements and/or rotations about the insertion direction (86), **in that** in particular by means of stops (102), each mounting element (82) is positionable in a defined manner in the insertion direction (86) relative to the respective mounting receptacle (42).

7. A mounting system in accordance with claims 4 to 6, **characterized in that** each mounting element (82) is provided with a securing unit (112), by means of which the mounting element is fixable, in the position inserted into the mounting receptacle (42), against a movement opposite the insertion direction (86), **in that** in particular the securing unit (112) has a securing body (114), which is configured to be brought into engagement with a securing receptacle (116) of the mounting receptacle (42).

8. A mounting system in accordance with claims 4 to 7, **characterized in that** a carrier base (132) of a load carrier (130) or of a trailer coupling (160) is fixable or, in the operating state, is fixed in the load receptacle (122) of each mounting element (82), **in that** in particular there are associated with each load receptacle (122) clamping elements (136), by means of which the carrier base (132) is fixable in a force-locking manner in the respective load receptacle (122), **in that** in particular each load receptacle (122) is U-shaped, for example in order to receive the carrier base (132).

9. A mounting system in accordance with claims 7 or 8, **characterized in that** the securing body (114) is blocked by a blocking element (156) against a movement out from the securing receptacle (116) when the load carrier (130) or the trailer coupling (160) is held in the respective load receptacle (122).

10. A mounting system in accordance with the preceding claims, **characterized in that** the set of two mounting receptacles (42) is held on the impact or crash element (16).

11. A mounting system in accordance with claim 10, **characterized in that** the mounting receptacles (42) are connected to the carrier (22) of the impact or crash element (16).

12. A mounting system in accordance with claims 9 to 11, **characterized in that** the mounting receptacles (42) are arranged on the carrier (22) in continuation of the mounting attachments (24).

13. A mounting system in accordance with claims 9 to 12, **characterized in that** the mounting receptacles (42) are arranged offset relative to the mounting attachments (24) of the impact or crash element (16).

14. A mounting system in accordance with claims 10 to 13, **characterized in that** the mounting receptacles (42) are connected non-releasably to the carrier (22) of the impact or crash element (16).

## Revendications

1. Système de montage (40) pour un porte-charge (140) ou un attelage de remorque (160), comprenant au moins un logement de montage (42), lequel peut être monté sur une partie arrière (14) d'une carrosserie de véhicule à moteur (12),
dans lequel le système de montage présente un ensemble (40) de deux logements de montage (42), qui est réalisé de sorte que chacun des logements de montage (42) à l'état monté est relié à la carrosserie de véhicule à moteur (12) avec l'une des zones de montage (26) pour l'élément de choc ou de collision (16) arrière prévu sur la carrosserie de véhicule à moteur (12), dans lequel l'élément de choc ou de collision (16) présente un support (22) déformable en cas de choc ou de collision, qui est relié aux zones de montage (26) de la carrosserie de véhicule à moteur (12) avec des saillies de montage (24), dans lequel chaque
logement de montage (42) peut être relié ou est relié à l'état monté à la zone de montage (26) respective au moyen d'un support de montage (46), **caractérisé en ce que** les logements de montage (42) sont disposés par le support de montage (46) à côté des saillies de montage (24) de l'élément de choc ou de collision (16).

2. Système de montage selon la revendication 1, **caractérisé en ce que** les logements de montage (42) sont disposés au moyen des supports de montage (46) dans le sens de la gravité en dessous des saillies de montage (24) de l'élément de choc ou de collision (16).

3. Système de montage selon l'une quelconque des revendications précédentes, **caractérisé en ce que** le support de montage (46) est fixé entre une saillie de montage (24) de l'élément de choc ou de collision (16) et la zone de montage (26) respective de la carrosserie de véhicule à moteur (12) pour la liaison aux zones de montage (26) de la carrosserie de véhicule à moteur (12), que le support de montage (46) respectif présente en particulier un corps central (52) qui est stabilisé par au moins un raidisseur (54), que le corps central (52) présente en particulier une zone d'appui (56) qui peut être fixée entre la zone de montage (26) et la saillie de montage (24) correspondante, que le corps central (52) présente en particulier une zone de maintien (66), laquelle supporte le logement de montage (42), que la zone d'appui (56) et la zone de maintien (66) sont en particulier reliées entre elles de manière résistante à la flexion par l'au moins un raidisseur (54).

4. Système de montage selon l'une quelconque des revendications précédentes, **caractérisé en ce que** chacun des logements de montage (42) peut être relié à un élément de montage (82), qu'en particulier les logements de montage (42) sont réalisés en forme de douille.

5. Système de montage selon la revendication 4, **caractérisé en ce que** des éléments de montage (82), qui sont en particulier pourvus à leur tour de logements de charge (122), lesquels permettent une liaison avec un porte-charge (130) ou un attelage de remorque (160), peuvent être insérés dans les logements de montage (42) ou peuvent être posés sur ceux-ci et fixés à ceux-ci.

6. Système de montage selon la revendication 4 ou 5, **caractérisé en ce que** chaque élément de montage (82) présente un corps de guidage (84) avec lequel l'élément de montage (82) peut être inséré dans une direction d'introduction (86) dans le logement de montage (42) ou posé sur celui-ci et peut être fixé sur celui-ci à l'encontre de mouvements transversaux et/ou de rotations autour de la direction d'introduction (86), qu'en particulier chaque élément de montage (82) peut être positionné de manière définie dans la direction d'introduction (86) par rapport au logement de montage (42) respectif par des butées (102).

7. Système de montage selon l'une quelconque des revendications 4 à 6, **caractérisé en ce que** chaque élément de montage (82) est pourvu d'une unité d'arrêt (112) avec laquelle celui-ci peut être fixé dans la position insérée dans le logement de montage (42) à l'encontre d'un déplacement dans le sens opposé à la direction d'introduction (86), que l'unité d'arrêt (112) présente en particulier un corps d'arrêt (114), lequel peut être mis en prise avec un logement d'arrêt (116) du logement de montage (42).

8. Système de montage selon l'une quelconque des revendications 4 à 7, **caractérisé en ce qu'**une base de support (132) d'un porte-charge (130) ou d'un attelage de remorque (160) peut être fixée dans un logement de charge (122) de chaque élément de montage (82) ou est fixée dans l'état de fonctionnement, que des éléments de serrage (136), avec lesquels la base de support (132) peut être fixée à force dans le logement de charge (122) respectif, sont associés en particulier à chaque logement de charge (122), qu'en particulier chaque logement de charge (122) est réalisé en forme de U, par exemple pour recevoir la base de support (132).

9. Système de montage selon l'une quelconque des revendications 7 ou 8, **caractérisé en ce que** le corps d'arrêt (114) est bloqué par un élément de blocage (156) à l'encontre d'un déplacement hors du logement d'arrêt (116) lorsque le porte-charge (130) ou l'attelage de remorque (160) est maintenu dans le logement de charge (122) respectif.

10. Système de montage selon l'une quelconque des revendications précédentes, **caractérisé en ce que** l'ensemble de deux logements de montage (42) est maintenu sur l'élément de choc ou de collision (16).

11. Système de montage selon la revendication 10, **caractérisé en ce que** les logements de montage (42) sont reliés au support (22) de l'élément de choc ou de collision (16).

12. Système de montage selon l'une quelconque des revendications 9 à 11, **caractérisé en ce que** les logements de montage (42) sont disposés sur le support (22) dans le prolongement des saillies de montage (24).

13. Système de montage selon l'une quelconque des revendications 9 à 12, **caractérisé en ce que** les logements de montage (42) sont disposés de manière décalée par rapport aux saillies de montage (24) de l'élément de choc ou de collision (16).

14. Système de montage selon l'une quelconque des revendications 10 à 13, **caractérisé en ce que** les logements de montage (42) sont reliés de manière indétachable au support (22) de l'élément de choc ou de collision (16).
